# EUROPEAN PATENT SPECIFICATION

(11) **EP 0 813 197 B1**
(45) Date of publication and mention of the grant of the patent: **02.04.2003**
(21) Application number: 97304198.1
(22) Date of filing: 16.06.1997
(51) Int. Cl.: G11B 20/10

(54) **System for recording and/or reproducing a pulse code modulation digital audio signal**
System zur Aufzeichnung und/oder Wiedergabe eines digitalen Audiopulskodemodulationssignals
Système pour enregistrer et/ou reproduire un signal audio numérique en modulation par impulsions codées

(30) Priority: 14.06.1996 KR 9621620
(43) Date of publication of application: 17.12.1997
(73) Proprietor: Samsung Electronics Co., Ltd., Suwon-city, Kyungki-do (KR)
(72) Inventor: Heo, Jung-Kwon, Jinjucity, Kyungsangnam-do (KR); Lee, Tae Hee, Suwoncity, Kyungki-do (KR)
(74) Representative: Chugg, David John

(56) References cited:
- EP-A- 0 431 537
- EP-A- 0 504 849
- EP-A- 0 702 368
- GB-A- 2 175 731
- GB-A- 2 285 708
- US-A- 5 247 396
- US-A- 5 570 308

## Description

The present invention relates to a system for recording and/or reproducing a pulse code modulated digital audio signal, and more particularly, to a system for recording and/or reproducing a PCM digital audio signal, in which digital audio signals can be recorded on a digital recording medium or can be reproduced from the digital recording medium, even though sampling frequencies of the PCM digital audio signals differ from each other.

All apparatuses which use PCM digital audio signals, use a reference unit which is a data unit for enabling an error correction. The size of the reference unit is determined according to the features of a transmission medium. A digital audio signal which has been sampled according to a predetermined sampling frequency is recorded on a recording medium, in the form of blocks having a size or amount of data which is determined according to a data recording characteristic of the recording medium, such as a compact disk (CD), a digital audio tape (DAT) and so on. When a reproduction operation is performed with respect to the recording medium, a digital-to-analog converter converts a digital audio signal into an analog audio signal in the sequence of the outflow of the data from the recording medium.

As to PCM digital audio signals, in order to replace an existing system which uses a sampling frequency of 44.1KHz or 48KHz, new audio recording systems which use a sampling frequency of 88.2KHz or 96KHz, for example, an advanced audio (ADA) system in Japan, have been proposed. However, the existing reproduction system which uses the sampling frequency of 44.1KHz or 48KHz, cannot reproduce audio signals which have been recorded in a digital form according to the newly proposed systems. Therefore, in order to make such an existing reproducing system reproduce a digital audio signal which has been recorded according to a new recording system, a separate digital signal processing is required so that a bit number representing each sample without creating noise can be handled. Among examples of the required digital signal processing, there is a low-pass filtering to eradicate a frequency component higher than 44.1KHz or 48KHz from a signal read from a recording medium, a decimation filtering to make the low-pass filtered signal into a signal having the sampling frequency of 44.1KHz or 48KHz. Thus, it costs too high to improve the existing reproducing system in order to reproduce a digital audio signal of a proposed signal recording system. Also, an amount of RAM capacity is additionally required for the above-described separate digital signal processing, thereby increasing the cost necessary for such an improvement.

The UK patent application GB 2 285 708 describes a digital data recording and reproducing apparatus in which data is recorded in groups consisting of odd numbered samples and groups consisting of even numbered samples. The combination of a group of odd numbered samples and a group of even numbered samples comprises a fundamental unit, with recording control means controlling recording means so that consecutive fundamental units are recorded at substantially consecutive positions of a recording medium. In this way it is possible to obtain decimated twice normal reproducing speed data without changing the amount of data read over a unit time period.

It is an aim of embodiments of the present invention to provide a system for recording an audio signal sampled according to an existing recording method and an audio signal sampled according to a new recording method in both an existing audio apparatus and a new audio apparatus employing the new recording method, using predetermined recording formats which can discern odd-numbered audio samples and even numbered audio samples of a digital audio signal with respect to each other.

Another aim of embodiments of the present invention is to provide a system for reproducing an audio signal sampled according to an existing recording method and an audio signal sampled according to a new recording method in both an existing audio apparatus and a new audio apparatus employing the new recording method, using predetermined recording formats which can discern odd-numbered audio samples and even-numbered audio samples of a digital audio signal with respect to each other.

According to a first aspect of the present invention, there is provided a digital audio recording apparatus for recording a received digital audio signal on a digital recording medium, the apparatus comprising :
reference unit formation means for receiving a pulse-code-modulated digital audio signal, and forming a reference unit sequence each reference unit having a predetermined size from the received digital audio signal;
formatting means for formatting the reference unit sequence into a recording unit sequence in which at least one recording unit has at least one data block among an odd-numbered data block and an even-numbered data block which exist in at least one reference unit; and
recording means for recording the recording unit sequence on a digital recording medium,
wherein the odd-numbered data block is a sequence of odd-numbered audio samples in at least one reference unit, and the even-numbered data block is a sequence of even-numbered audio samples in at least one reference unit; characterised in that said formatting means further comprises an additional data inserter for inserting additional data representing a sampling frequency of. the audio signal contained in a recording unit sequence, into the recording unit sequence and said additional data inserter further inserts additional data representing the number of audio samples in each recording unit into the recording unit sequence.

Preferably, the predetermined size is determined based on an audio data amount of which an error imposed during recording and reproducing a linear pulse-code-modulated digital audio signal can be corrected.

Said recording unit may be determined based on a data amount which can be continuously recorded on said digital recording medium according to a signal recording characteristic of the digital recording medium.

Said formatting means preferably formats respective reference unit into one recording unit including both an odd-numbered data block and an even-numbered data block contained in the respective reference unit.

Said formatting means may format respective reference unit into a first recording unit containing an odd-numbered data block in the respective reference unit and a second recording unit containing an even-numbered data block in the respective reference unit.

Said additional data inserter may insert a second additional data which discerns the first recording unit and the second recording unit obtained from the same reference unit, into the preceding end of each of the first and second recording units.

Said formatting means may format a plurality of reference units into a first recording unit containing odd-numbered data blocks in the plurality of reference units and a second recording unit containing even-numbered data blocks in the plurality of reference units. Said additional data inserter may insert additional data which discerns the first and second recording units obtained from a plurality of same reference units into the preceding end of each of the first and second recording units.

Preferably, the formatting means for formatting a reference unit sequence into a recording unit sequence uses at least two recording formats among a first, a second and a third recording formats, wherein the first recording format is for formatting a reference unit into a first recording unit including both an odd-numbered data block and an even-numbered data block contained in the reference unit, the second recording format is for formatting a reference unit into a second recording unit including an odd-numbered data block contained in the reference unit and a third recording unit including an even-numbered data block contained in the reference unit, and the third recording format is for formatting a plurality of reference units into a fourth recording unit including odd-numbered data blocks contained in the plurality of reference units and a fifth recording unit including even-numbered data blocks contained in the plurality of reference units.

Said additional data inserter may comprise additional data insertion means for inserting recording format data representing a recording format used in formatting of a recording unit sequence and first additional data representing the sampling frequency of the audio signal which is contained in the recording unit sequence, into said recording unit sequence, for inserting second additional data representing the number of the audio samples in the first recording unit into the recording unit sequence, in the case that the reference unit sequence is formatted according to the first recording format, for inserting third additional data which discriminates a second recording unit and a third recording unit obtained from a reference unit into the preceding ends of each of the second and the third recording units, in the case that the reference unit sequence is formatted according to the second recording format, and for inserting the fourth additional data which discriminates a fourth recording unit and a fifth recording unit obtained from a plurality of same reference units, into the preceding end of each of the fourth and fifth recording units, in the case that the reference unit sequence is formatted according to the third recording format.

The digital audio recording apparatus may further comprise a digital audio reproduction apparatus for reproducing an audio signal recorded on the recording medium, the reproduction apparatus comprising: a digital-to-analog converter for digital-to-analog converting an input digital audio signal according to a predetermined operating frequency; reading means for reading out formatted data from the digital recording medium, and discriminating a sampling frequency of the digital audio signal contained in the formatted data using the read formatted data; and inverse formatting means for inversely formatting and signal-processing the formatted data read out by said reading means in the form that digital-to-analog conversion can be performed by said D/A converter, based on comparison between the discriminated sampling frequency and the predetermined operating frequency of said D/A converter, and for outputting the resultant digital audio signal to said D/A converter, wherein an odd-numbered data block is a sequence of the odd-numbered audio samples within at least one reference unit, and an even-numbered data block is a sequence of the even-numbered audio samples within the at least one reference unit.

Preferably, said reference unit is determined based on an audio data amount of which an error imposed during recording and reproducing a linear pulse-code-modulated digital audio signal can be corrected.

Preferably, said recording unit is determined based on a data amount which can be continuously read out from said digital recording medium according to a signal recording characteristic of the digital recording medium.

Preferably, said inverse formatting means inversely formats either or both of an odd-numbered data block and corresponding even-numbered data block into a digital audio signal to be supplied to said D/A converter, based on comparison between the discriminated sampling frequency and the operating frequency, in the case that data which is formatted by a recording format for formatting a reference unit into one recording unit including both of the odd-numbered data block and the even-numbered data block contained in the reference unit is recorded on the digital recording medium.

Said inverse formatting means may inversely format one of the odd-numbered data blocks and the even-numbered data blocks if the discriminated sampling frequency is a multiple of said operating frequency, while it inversely formats both of the odd-numbered data blocks and the even-numbered data blocks if said operating frequency is a multiple of the discriminated sampling frequency.

Said inverse formatting means may inversely format either or both of first recording unit and second recording unit into a digital audio signal to be supplied to said D/A converter, based on comparison between the discriminated sampling frequency and the operating frequency, in the case that data which is formatted according to a recording format for formatting a reference unit into a first recording unit including the odd-numbered data block contained in the reference unit and into a second recording unit including the even-numbered data block contained in the reference unit, is recorded on the digital recording medium.

Said inverse formatting means may inversely format one of the first recording unit and the second recording unit if the discriminated sampling frequency is a multiple of said operating frequency, while it inversely formats both of the odd-numbered data blocks and the even-numbered data blocks if said operating frequency is a multiple of the discriminated sampling frequency.

Said inverse formatting means may inversely format either or both of a first recording unit and a second recording unit into a digital audio signal to be supplied to said D/A converter, based on comparison between the discriminated sampling frequency and the operating frequency, in the case that data which is formatted according to the recording format for formatting a plurality of reference units into the first recording unit including the odd-numbered data blocks contained in the plurality of reference units and into the second recording unit including the even-numbered data blocks contained in the plurality of reference units, is recorded on the digital recording medium.

Said inverse formatting means may inversely format one of the first recording unit and the second recording unit if the discriminated sampling frequency is a multiple of said operating frequency, while it inversely formats both of the first recording units and the second recording units if said operating frequency is a multiple of the discriminated sampling frequency.

For a better understanding of the invention, and to show how embodiments of the same may be carried into effect, reference will now be made, by way of example, to the accompanying diagrammatic drawings, in which:
Figure 1 is a schematic block diagram of a digital audio signal recording apparatus according to an embodiment of the present invention;
Figure 2 is a detailed block diagram of a formatting unit 20 shown in figure 1;
Figures 3A-3D are views for explaining first, second and third recording formats according to a preferred embodiment of the present invention;
Figure 4 is a schematic block diagram of a digital reproducing apparatus of a digital audio signal recording apparatus according to an embodiment of the present invention;
Figure 5 is a block diagram of a digital reproducing apparatus of a digital audio signal recording apparatus which can reproduce an audio signal having a sampling frequency multiplied by factors of two; and
Figure 6 is a block diagram of a digital audio signal reproducing apparatus which can reproduce an audio signal having a sampling frequency multiplied by factors of a half.

Preferred embodiments of the present invention will be described below in more detail with reference to the accompanying drawings.

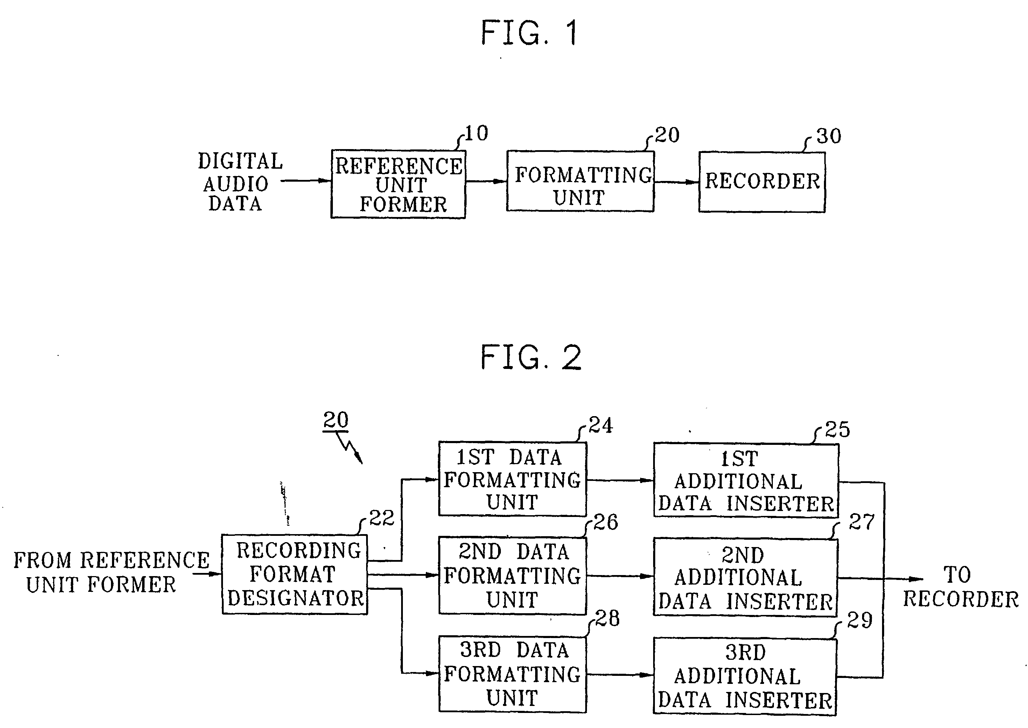

A digital audio signal recording apparatus shown in figure 1 can record on a recording medium an audio signal having a sampling frequency of 44.1KHz or 48KHz according to an existing audio recording method as well as an audio signal having a sampling frequency of 88.2KHz or 96KHz according to a new audio recording method, using a recording format proposed in the present invention. For clarity of explanation, the sampling frequency such as 88.2KHz (or 96KHz) according to the new recording method is called a first sampling frequency, and the sampling frequency such as 44.1KHz (or 48KHz) according to the existing recording method is called a second sampling frequency.

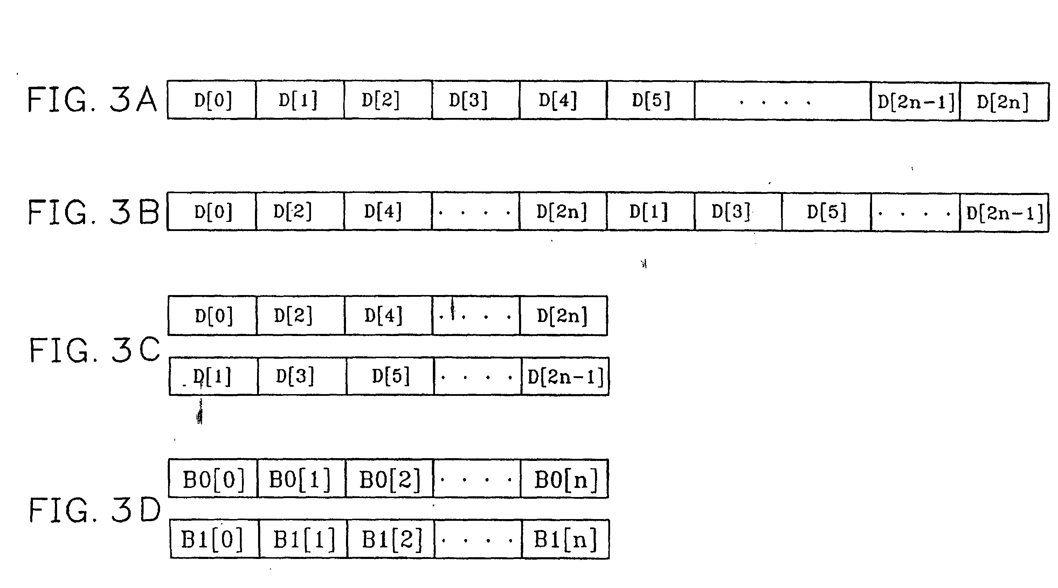

A linear pulse code modulated (PCM) digital audio signal having the first or second sampling frequency is input to a reference unit former 10. Here, the linear PCM represents a pulse code modulation having a linear relationship between a recording characteristic and a reproduction characteristic of a signal. The linear PCM digital audio signal represented in the temporal domain is input to the reference unit former 10 of Figure 1 from an external device (not shown). The reference unit former 10 divides the input linear PCM digital audio signal into reference units each having a predetermined size. The reference unit has a data amount which permits error correction during reproducing. A size of the reference unit is properly controlled by the amount of the additional data which is inserted. However, if the existing reference unit includes the additional data for error correction, the reference unit obtained by the reference unit former 10 may have the same amount of audio data as that of the existing reference unit. An example of the reference unit obtained by division is shown in Figure 3A. The reference unit of Figure 3A is composed of a sequence of 2n+1 audio samples. The reference unit former 10 supplies the reference units obtained by the division to a formatting unit 20, sequentially. The formatting unit 20 uses one of three recording formats shown in Figures 3B through 3D, and formats audio samples within the reference units. The detailed structure and operation of the formatting unit 20 will be described below with reference to Figures 2 and 3B∼3D. A recording unit 30 digitally records a signal formatted by the formatting unit 20 on a recording medium (not shown) such as a CD and a DAT.

Figure 2 is a detailed block diagram of the formatting unit 20 shown in Figure 1. A recording format designator 22 in the formatting unit 20 designates one among three recording formats shown in figures 3B through 3D with respect to the reference units obtained by the reference unit former 10. The recording format designation of the recording format designator 22 can be accomplished by a user who intends to record an audio signal.

When a first recording format is selected, the recording format designator 22 outputs a sequence of the reference units which are received from the reference unit former 10 to a first data formatting unit 24. The first data formatting unit 24 which receives the reference units of the audio signal from the recording format designator 22 formats audio samples within an individual reference unit into a first recording unit. In more detail, the first data formatting unit 24 separates the audio samples in the reference unit into odd-numbered audio samples and even-numbered audio samples and produces an odd-numbered data block which is a sequence of the odd-numbered audio samples and an even-numbered data block which is a sequence of the even-numbered audio samples. Therefore, the time-led audio samples in the reference unit is also located in a time-leading position in the odd-numbered data block or even-numbered data block. Then, the first data formatting unit 24 uses an odd-numbered data block and an even-numbered data block to form a first recording unit. In the first recording unit an odd number data block time-leads an even number data block. Here, the first recording unit is composed of an odd-numbered data block and an even-numbered data block which are obtained from a reference unit. The first recording unit is determined based on a data amount which can be sequentially recorded on a digital recording medium according to a signal recording characteristic of the digital recording medium. Other recording units described below are determined by the same condition as in case of the first recording unit.

Figure 3B illustrating the first recording format shows the first recording unit composed of an odd-numbered data block having audio samples D[0], D[2], D[4], ..., and D[2n] and an even-numbered data block having audio samples D[1], D[3], D[5], ..., and D[2n-1]. The first data formatting unit 24 outputs a sequence of the first recording units obtained by the formatting such as a data block production and a recording unit production, to a first additional data inserter 25.

The first additional data inserter 25 receives a sequence of the first recording units from the first data formatting unit 24 and inserts first additional data representing an audio sampling frequency of the received recording unit sequence and second additional data representing the number of the audio samples in an individual recording unit, into the beginning portion of the recording unit sequence.

Since the present invention is not limited to the example where the first and second additional data is inserted into the beginning portion of the recording unit sequence, it is apparent to a person skilled in the art that the first data formatting unit 24 may be modified in such a manner that the first and second additional data can be properly inserted in the recording unit sequence according to the characteristic of a transmission channel or a recording medium.

When a second recording format is selected, the recording format designator 22 outputs a sequence of the reference units which are received from the reference unit former 10 to a second data formatting unit 26. The second data formatting unit 26 formats audio samples within an individual reference unit received from the recording format designator 22 into two recording units. In more detail, the second data formatting unit 26 separates the audio samples in the reference unit into odd-numbered audio samples and even-numbered audio samples, and produces an odd-numbered data block which is a sequence of the odd-numbered audio samples and an even-numbered data block which is a sequence of the even-numbered audio samples. Therefore, the time-led audio samples in the reference unit is also located in a time-leading position in the odd-numbered data block or even-numbered data block. The second data formatting unit 26 forms a second recording unit composed of an odd-numbered data block and a third recording unit composed of an even-numbered data block, for each reference unit. Therefore, two recording units are obtained from a reference unit. Figure 3C illustrating the second recording format shows the second recording unit containing audio samples D[0], D[2], D[4], ..., and D[2n] and the third recording unit containing audio samples D[1], D[3] D[5], ..., and D[2n-1]. The second data formatting unit 26 outputs a sequence of the two recording units obtained for each individual reference unit to a second additional data inserter 27. In the sequence of the recording units, the second and third recording units corresponding to a relatively time-leading reference unit time-leads those corresponding to a relatively time-lagging reference unit. In case of the recording units corresponding to the same reference unit, the second recording unit time-leads the third recording unit.

The second additional data inserter 27 receives a sequence of the recording units from the second data formatting unit 26 and inserts the first additional data and the second additional data, mentioned previously, into the beginning portion of the recording unit sequence output from the second data formatting unit 26. The second additional data inserter 27 also inserts third additional data for discerning second and third recording units obtained from the same reference unit into the beginning portion of the respective second and third recording units.

When a third recording format is selected, the recording format designator 22 outputs a sequence of the reference units which are received from the reference unit former 10 to a third data formatting unit 28. The third data formatting unit 28 formats audio samples within a plurality of reference units into two recording units. In more detail, the third data formatting unit 28 separates the audio samples in each reference unit into odd-numbered audio samples and even-numbered audio samples, and produces an odd-numbered data block which is a sequence of the odd-numbered audio samples and an even-numbered data block which is a sequence of the even-numbered audio samples. Then, the third data formatting unit 28 forms a fourth recording unit composed of a plurality of odd-numbered data blocks and a fifth recording unit composed of a plurality of even-numbered data blocks corresponding to the plurality of the odd-numbered data blocks in the fourth recording unit. The number of the reference units used in forming the fourth and fifth recording units is determined according to whether the fourth recording unit of the fifth recording unit can be corrected during reproducing.

Figure 3D illustrating the third recording format shows the fourth recording unit containing the plurality of the odd-numbered data blocks B0[0], B0[1], B0[2], ..., and B0[n] and the fifth recording unit containing the plurality of the even-numbered data blocks B1[0], B1[1], B1[2], ..., and B1[n] individually corresponding to the plurality of the odd-numbered data blocks of the fourth recording unit. Here, the odd-numbered data block B0[0] and the even-numbered data block B1[0] are obtained from the same reference unit, and other odd-numbered and even-numbered data blocks are obtained in the same manner.

The third data formatting unit 28 outputs a sequence of the recording units composed of the fourth and fifth recording units to a third additional data inserter 29. In the sequence of the recording units, the fourth and fifth recording units corresponding to a relatively time-leading reference unit time-leads those corresponding to a relatively time-lagging reference unit. In the fourth or fifth recording unit, the data blocks will do so.

The third additional data inserter 29 receives a sequence of the recording units from the third data formatting unit 28 and inserts the first additional data and the second additional data into the beginning portion of the recording unit sequence output from the third data formatting unit 28. The third additional data inserter 29 also inserts third additional data for discerning two recording units obtained from the same reference units into the beginning portion of the respective fourth and fifth recording units.

The data which underwent the data formatting and the additional data insertion through the above-described procedures, that is, the output data of the first through third additional data inserter 25, 27 or 29 is recorded on a recording medium by the recorder 30.

The above-described apparatus of Figure 1 is described in a structure capable of using all three recording formats. However, it is desirable that only one recording format is used in an actual implementation thereof. If the Figure 1 apparatus has a structure using all three recording formats, separate additional data for discerning the three recording formats, that is, recording format data is needed. In this case, the recorder 30 in the Figure 1 apparatus inserts the recording format data representing a recording format used in all three recording formats into the beginning portion of the formatted data.

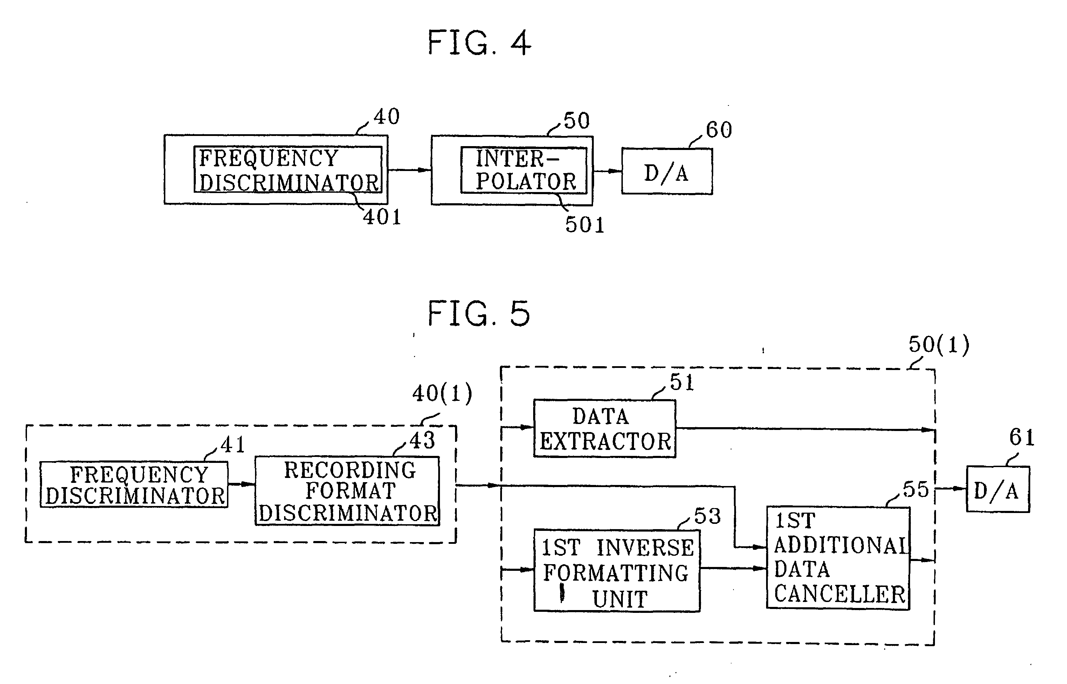

Figure 4 shows a reproducing apparatus for reproducing a digital audio signal recorded on a recording medium according to a recording format. The reproducing apparatus shown in Figure 4 reproduces a digital audio signal from a recording medium (not shown) on which the digital audio signal having a first sampling frequency or a second sampling frequency is recorded. A reader 40 reads a digital data from the recording medium (not shown). A frequency discriminator 401 in the reader 40 discriminates an audio sampling frequency based on the second additional data contained in the read data. The reader 40 outputs the read data together with the discrimination result of the sampling frequency to an inverse formatting unit 50. The inverse formatting unit 50 inversely formats the input audio signal based on a pre-stored recording format corresponding to the sampling frequency discrimination result. A digital-to-analog (D/A) converter 60 digital-to-analog converts the inversely formatted signal according to its sampling operating frequency.

When the sampling frequency of the audio signal read from the recording medium is identical to the operating frequency for the digital-to-analog conversion of the D/A converter 60, the inverse formatting unit 50 inversely formats all the odd-numbered and even-numbered data blocks contained in the read data into a reference unit prior to being formatted.

When the read audio signal has a first sampling frequency and the operating frequency of the D/A converter 60 is the same as a second sampling frequency, the inverse formatting unit 50 outputs only odd-numbered data blocks or only even-numbered data blocks contained in the read data to the D/A converter 60.

When the read audio signal has a second sampling frequency and the operating frequency of the D/A converter 60 is the same as a first sampling frequency, the inverse formatting unit 50 formats both odd-numbered data blocks and even-numbered data blocks contained in the read data according to a prestored recording format. Then, an interpolator 501 in the inverse formatting unit 50 performs interpolation of the inversely formatted data to obtain audio samples corresponding to the first sampling frequency. Here, the recording format prestored in the inverse formatting unit 50 is the same as those illustrated with reference to Figure 3B through 3D. The output data of the inverse formatting unit 50 is supplied to the D/A converter 60. The signal supplied to the D/A converter 60 is digital-to-analog converted and then is supplied to an amplifier (not shown) which converts an electrical audio signal into an acoustic signal.

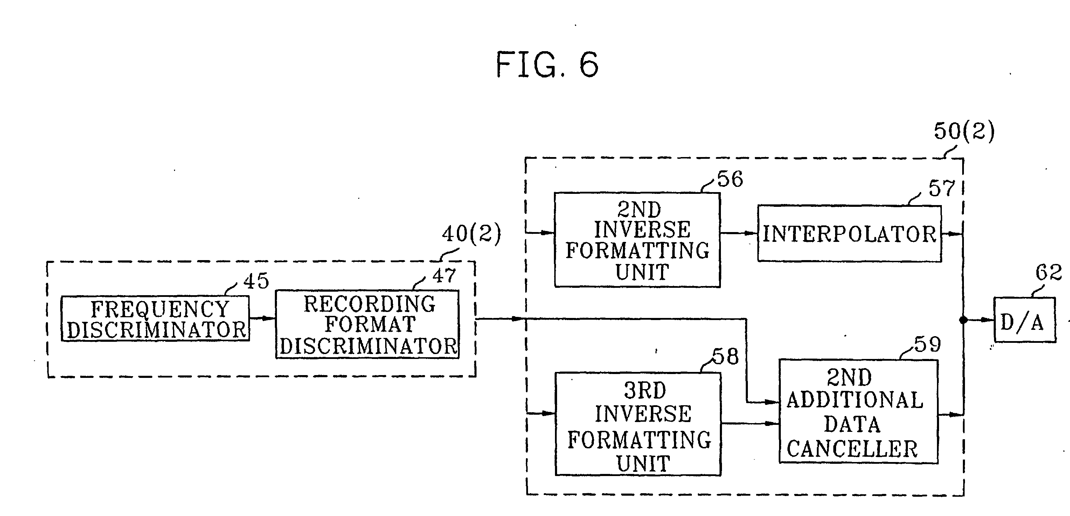

Differently from the Figure 4 apparatus, the apparatuses for reproducing individual audio signals which are formatted using three recording formats and recorded on a recording medium will be described with reference to Figures 5 and 6. The first, second and third additional data and recording units described above are used as the same meanings in the descriptions of Figures 5 and 6.

Figure 5 shows a reproducing apparatus which uses a D/A converter 60 having the same operating frequency as the second sampling frequency. A reader 40(1) of Figure 5 reads data stored in a recording medium (not shown). A frequency discriminator 41 in the reader 40(1) discriminates the sampling frequency of the audio signal contained in the read data based on the first additional data contained in the read data, and outputs the read data to a recording format discriminator 43. The recording format discriminator 43 uses recording format data contained in the data received from the frequency discriminator 41 to discriminate the recording format of the audio signal contained in the read data. In case of an audio signal formatted according to the first recording format, the data recorded on a recording medium contains first and second additional data and recording format data. In case of an audio signal formatted according to the second or the third recording format, the data contains first second and third additional data and recording format data. The reader 40(1) determines the data to be supplied to the inverse formatting unit 50(1) based on the frequency discrimination result and the discriminated recording format data.

If the audio signal recorded on the recording medium has the first sampling frequency and the first recording format, the reader 40(1) outputs all data read from the recording medium to a data extractor 51 in the inverse formatting unit 50(1). The data extractor 51 extracts only even-numbered audio samples from the data applied from the reader 40(1). The even-numbered audio samples are extracted on the basis of the second additional data contained in the output data of the reader 40(1). As a result, the output data of the reader 40(1) is decimated by the ratio of two to one (2:1). The resultant audio samples are output to the D/A converter 61.

It is apparent to one skilled in the art that the present invention is not limited to the extraction of the even-numbered audio samples by the data extractor 51. Thus, the data extractor 51 can be modified to extract odd-numbered audio samples.

When the audio signal recorded on the recording medium has the first sampling frequency and the second recording format, the reader 40(1) outputs second recording units and third additional data among the data read from the recording medium to a first additional data canceller 55. The first additional data canceller 55 cancels the additional data from the data applied from the reader 40(1), and outputs the remaining audio samples after cancelling the additional data to the D/A converter 61. When the audio signal recorded on the recording medium has the first sampling frequency and the third recording format, the reader 40(1) outputs fourth recording units and second additional data among the data read from the recording medium to the first additional data canceller 55. The first additional data canceller 55 cancels the additional data from the data received from the reader 40(1), and then outputs the remaining audio samples to the D/A converter 61.

The D/A converter 61 receiving audio samples output from the inverse formatting unit 50(1) performs digital-to-analog conversion with respect to audio samples received based on the second sampling frequency. Therefore, when the audio signal recorded on the recording medium has a first sampling frequency and the D/A converter 61 operates according to the second sampling frequency, the analog audio signal finally output from the Figure 5 apparatus has an audio quality which is not nearly recognized by the human auditory system. Thus, the present invention can provide an audio signal of improved audio quality.

When the audio signal recorded on a recording medium has the second sampling frequency and the first recording format, the reader 40(1) outputs all data read from the recording medium to a first inverse formatter 53. The inverse formatter 53 inversely formats the received data according to the pre-stored first recording format. That is, the odd-numbered data block and the even-numbered data block contained in the respective first recording units are discerned on the basis of the second additional data, and the samples in the odd-numbered data block and the samples in the even-numbered data block are rearranged to have a data sequence prior to being formatted. The inversely formatted data, that is, the audio samples which are rearranged in the original sequence and the additional data are output to the first additional data canceller 55. The first additional data canceller 55 cancels the additional data from the data received from the first inverse formatter 53, and outputs the remaining audio samples to the D/A converter 61.

When the data recorded on the recording medium has a second sampling frequency and one of the second and the third recording formats, the reader 40(1) outputs all read data to the first additional data canceller 55. The first additional data canceller 55 cancels the additional data from the data received, and outputs the audio samples to the D/A converter 61. Thus, the Figure 5 apparatus can also process an audio signal having an existing sampling frequency.

Figure 6 shows a reproducing apparatus which uses a D/A converter 60 having the same operating frequency as a first sampling frequency. A reader 40(2) shown in Figure 6 reads data stored in a recording medium. A frequency discriminator 45 in the reader 40(2) discriminates the sampling frequency of the read audio signal based on the first additional data contained in the read data, and outputs the read data to a recording format discriminator 47. The recording format discriminator 47 discriminates the recording format of the read data, based on a recording format data contained in the data received from the frequency discriminator 45. The reader 40(2) determines the data to be supplied to the inverse formatting unit 50(1) based on the frequency discrimination result and the discriminated recording format.

When the audio signal recorded on the recording medium has a second sampling frequency and one of first through third recording formats, the reader 40(2) outputs all data read from the recording medium to a second inverse formatter 56. The second inverse formatter 56 determines a recording format for the audio data received from the reader 40(2) based on the recording format data contained in the received data and inversely formats the received data according to the determined recording format of the audio data. When the recording format data represents the first recording format, the second inverse formatter 56 discerns the odd-numbered data block and the even-numbered data block contained in each first recording unit on the basis of the second additional data, and rearranges the audio samples in the odd-numbered data block and the audio samples in the even-numbered data block to have a data sequence prior to being formatted. When the recording format data represents the second recording format, the second inverse formatter 56 uses the second and third additional data and rearranges the audio samples in the second and third recording units in the original sequence. Also, when the recording format data represents the third recording format, the second inverse formatter 56 uses the third recording format, and the second and third additional data and rearranges the odd-numbered and even-numbered data blocks in the fourth and fifth recording units in the original sequence. Then, the second inverse formatter 56 cancels the additional data contained in the received data from the recording format discriminator 47, and the pure audio samples from which the additional data has been cancelled are applied to an interpolator 57. The interpolator 57 performs an interpolation operation with respect to the input audio samples using zero-insertion and interpolation. The audio samples obtained by interpolation are supplied to the D/A converter 62. The D/A converter 62 digital-to-analog converts the data applied from the inverse formatter 50(2) according to the first sampling frequency. Therefore, the Figure 6 apparatus can provide a digital audio signal having an existing sampling frequency to a listener as an acoustic signal having the substantially same audio quality as that of the signal having the sampling frequency according to a new recording method.

When the audio signal recorded on the recording medium has a first sampling frequency and a first recording format, the reader 40(2) outputs all data read from the recording medium to a third inverse formatter 58. The third inverse formatter 58 inversely formats the data received from the reader 40(2) according to the pre-stored first recording format. That is, the odd-numbered data block and the even-numbered data block contained in the respective first recording units are discerned on the basis of the second additional data, and the audio samples in the odd-numbered data block and the audio samples in the even-numbered data block are rearranged to have a data sequence prior to being formatted. The inversely formatted data, that is, the audio samples which are rearranged in the original sequence and the additional data are output to the second additional data canceller 59. The second additional data canceller 59 cancels the additional data from the data received, the remaining audio samples are inputted to the D/A converter 62. When the data recorded on the recording medium has a first sampling frequency and one of second and third recording formats, the reader 40(2) outputs all read data to the second additional data canceller 59. The second additional data canceller 59 cancels the additional data from the received data and outputs the audio samples to the D/A converter 62.

The above-described embodiment has been described with respect to an existing method using the sampling frequency of 44.1KHz or 48KHz and the new audio recording method using the sampling frequency of 88.2KHz or 96KHz. However, the present invention is not limited to such sampling frequencies, and can be applied between an audio signal of a new recording method and an audio signal having two times the new recording method sampling frequency. Further, the present invention can be applied to all audio signals having a two-times frequency difference between the sampling frequencies.

As described above, the audio signal recording and reproduction system according to embodiments of the present invention can reproduce audio signals having a two-times frequency difference between the sampling frequencies in the audio apparatus having a relatively lower sampling frequency and an audio apparatus having a relatively higher sampling frequency.

While only certain embodiments of the invention have been specifically described herein, it will be apparent that numerous modifications may be made thereto without departing from the scope of the invention as defined in the appended claims.

## Claims

1. A digital audio recording apparatus for recording a received digital audio signal on a digital recording medium, the apparatus comprising :
reference unit formation means (10) for receiving a pulse-code-modulated digital audio signal, and forming a reference unit sequence each reference unit having a predetermined size from the received digital audio signal;
formatting means (20) for formatting the reference unit sequence into a recording unit sequence in which at least one recording unit has at least one data block among an odd-numbered data block and an even-numbered data block which exist in at least one reference unit; and
recording means (30) for recording the recording unit sequence on a digital recording medium,
wherein the odd-numbered data block is a sequence of odd-numbered audio samples in at least one reference unit, and the even-numbered data block is a sequence of even-numbered audio samples in at least one reference unit; **characterised in that** said formatting means (20) further comprises an additional data inserter (25) for inserting additional data representing a sampling frequency of the audio signal contained in a recording unit sequence, into the recording unit sequence and said additional data inserter (25) further inserts additional data representing the number of audio samples in each recording unit into the recording unit sequence.

2. The digital audio recording apparatus according to claim 1, wherein the predetermined size is determined based on an audio data amount of which an error imposed during recording and reproducing a linear pulse-code-modulated digital audio signal can be corrected.

3. The digital audio recording apparatus according to claim 1 or 2, wherein said recording unit is determined based on a data amount which can be continuously recorded on said digital recording medium according to a signal recording characteristic of the digital recording medium.

4. The digital audio recording apparatus according to claim 1, 2 or 3, wherein said formatting means (20) formats respective reference unit into one recording unit including both an odd-numbered data block and an even-numbered data block contained in the respective reference unit.

5. The digital audio recording apparatus according to claim 1, wherein said formatting means (20) formats respective reference unit into a first recording unit containing an odd-numbered data block in the respective reference unit and a second recording unit containing an even-numbered data block in the respective reference unit.

6. The digital audio recording apparatus according to claim 5, wherein said additional data inserter inserts a second additional data which discerns the first recording unit and the second recording unit obtained from the same reference unit, into the preceding end of each of the first and second recording units.

7. The digital audio recording apparatus according to claim 1, wherein said formatting means (20) formats a plurality of reference units into a first recording unit containing odd-numbered data blocks in the plurality of reference units and a second recording unit containing even-numbered data blocks in the plurality of reference units.

8. The digital audio recording apparatus according to claim 7, wherein said additional data inserter inserts second additional data which discerns the first and second recording units obtained from a plurality of same reference units into the preceding end of each of the first and second recording units.

9. A digital audio recording apparatus according to claims 1, 2 or 3, wherein
the formatting means (20) for formatting a reference unit sequence into a recording unit sequence uses at least two recording formats among a first, a second and a third recording formats, wherein the first recording format is for formatting a reference unit into a first recording unit including both an odd-numbered data block and an even-numbered data block contained in the reference unit, the second recording format is for formatting a reference unit into a second recording unit including an odd-numbered data block contained in the reference unit and a third recording unit including an even-numbered data block contained in the reference unit, and the third recording format is for formatting a plurality of reference units into a fourth recording unit including odd-numbered data blocks contained in the plurality of reference units arid a fifth recording unit including even-numbered data blocks contained in the plurality of reference units.

10. The digital audio recording apparatus according to claim 1, wherein said additional data inserter comprises additional data insertion means (25, 27, 29) for inserting recording format data representing a recording format used in formatting of a recording unit sequence and first additional data representing the sampling frequency of the audio signal which is contained in the recording unit sequence, into said recording unit sequence,
for inserting second additional data representing the number of the audio samples in the first recording unit into the recording unit sequence, in the case that the reference unit sequence is formatted according to the first recording format,
for inserting third additional data which discriminates a second recording unit and a third recording unit obtained from a reference unit into the preceding ends of each of the second and the third recording units, in the case that the reference unit sequence is formatted according to the second recording format, and
for inserting the fourth additional data which discriminates a fourth recording unit and a fifth recording unit obtained from a plurality of same reference units, into the preceding end of each of the fourth and fifth recording units, in the case that the reference unit sequence is formatted according to the third recording format.

11. The digital audio recording apparatus of any of claims 1 to 10, further comprising a digital audio reproduction apparatus for reproducing an audio signal recorded on the recording medium, the reproduction apparatus comprising:
a digital-to-analog (D/A) converter (60) for digital-to-analog converting an input digital audio signal according to a predetermined operating frequency;
reading means (40) for reading out formatted data from the digital recording medium, and discriminating a sampling frequency of the digital audio signal contained in the formatted data using the read formatted data; and
inverse formatting means (50)for inversely formatting and signal-processing the formatted data read out by said reading means in the form that digital-to-analog conversion can be performed by said D/A converter (60), based on comparison between the discriminated sampling frequency and the predetermined operating frequency of said D/A converter (60), and for outputting the resultant digital audio signal to said D/A converter (60),
wherein an odd-numbered data block is a sequence of the odd-numbered audio samples within at least one reference unit, and an even-numbered data block is a sequence of the even-numbered audio samples within the at least one reference unit.

12. The digital audio recording apparatus according to claim 11, wherein said reference unit is determined based on an audio data amount of which an error imposed during recording and reproducing a linear pulse-code-modulated digital audio signal can be corrected.

13. The digital audio recording apparatus according to claim 11, wherein said recording unit is determined based on a data amount which can be continuously read out from said digital recording medium according to a signal recording characteristic of the digital recording medium.

14. The digital audio recording apparatus according to claim 11, wherein said inverse formatting means (50) inversely formats either or both of an odd-numbered data block and corresponding even-numbered data block into a digital audio signal to be supplied to said D/A converter (60), based on comparison between the discriminated sampling frequency and the operating frequency, in the case that data which is formatted by a recording format for formatting a reference unit into one recording unit including both of the odd-numbered data block and the even-numbered data block contained in the reference unit is recorded on the digital recording medium.

15. The digital audio recording apparatus according to claim 14, wherein said inverse formatting means (50) inversely formats one of the odd-numbered data blocks and the even-numbered data blocks if the discriminated sampling frequency is a multiple of said operating frequency, while it inversely formats both of the odd-numbered data blocks and the even-numbered data blocks if said operating frequency is a multiple of the discriminated sampling frequency.

16. The digital audio recording apparatus according to claim 11, wherein said inverse formatting means (50) inversely formats either or both of first recording unit and second recording unit into a digital audio signal to be supplied to said D/A converter (60), based on comparison between the discriminated sampling frequency and the operating frequency, in the case that data which is formatted according to a recording format for formatting a reference unit into a first recording unit including the odd-numbered data block contained in the reference unit and into a second recording unit including the even-numbered data block contained in the reference unit, is recorded on the digital recording medium.

17. The digital audio recording apparatus according to claim 16, wherein said inverse formatting means (50) inversely formats one of the first recording unit and the second recording unit if the discriminated sampling frequency is a multiple of said operating frequency, while it inversely formats both of the odd-numbered data blocks and the even-numbered data blocks if said operating frequency is a multiple of the discriminated sampling frequency.

18. The digital audio recording apparatus according to claim 11, wherein said inverse formatting means (50) inversely formats either or both of a first recording unit and a second recording unit into a digital audio signal to be supplied to said D/A converter (60), based on comparison between the discriminated sampling frequency and the operating frequency, in the case that data which is formatted according to the recording format for formatting a plurality of reference units into the first recording unit including the odd-numbered data blocks contained in the plurality of reference units and into the second recording unit including the even-numbered data blocks contained in the plurality of reference units, is recorded on the digital recording medium.

19. The digital audio recording apparatus according to claim 18, wherein said inverse formatting means (50) inversely formats one of the first recording unit and the second recording unit if the discriminated sampling frequency is a multiple of said operating frequency, while it inversely formats both of the first recording units and the second recording units if said operating frequency is a multiple of the discriminated sampling frequency.

## Patentansprüche

1. Digitale Audio-Aufzeichnungsvorrichtung zum Aufzeichnen eines empfangenen digitalen Audiosignals auf ein digitales Aufzeichnungsmedium, wobei die Vorrichtung umfasst:
eine Bezugseinheit-Ausbildungseinrichtung (10), die ein pulscodemoduliertes digitales Audiosignal empfängt und eine Bezugseinheit-Sequenz aus dem empfangenen digitalen Audiosignal ausbildet, wobei jede Bezugseinheit eine vorgegebene Größe hat;
eine Formatiereinrichtung (20), die die Bezugseinheit-Sequenz in eine Aufzeichnungseinheit-Sequenz formatiert, wobei wenigstens eine Aufzeichnungseinheit wenigstens einen Datenblock aus einem ungeradzahlig nummerierten Datenblock und einem geradzahlig nummerierten Datenblock aufweist, die in wenigstens einer Bezugseinheit vorhanden sind; und
eine Aufzeichnungseinrichtung (30), die die Aufzeichnungseinheit-Sequenz auf einem digitalen Aufzeichnungsmedium aufzeichnet,
wobei der ungeradzahlig nummerierte Datenblock eine Sequenz aus ungeradzahlig nummerierten Audio-Abtastwerten in wenigstens einer Bezugseinheit ist und der geradzahlig nummerierte Datenblock eine Sequenz geradzahlig nummerierter Audio-Abtastwerte in wenigstens einer Bezugseinheit ist; **dadurch gekennzeichnet, dass** die Formatiereinrichtung (20) des Weiteren wenigstens eine Einfügevorrichtung (25) für zusätzliche Daten umfasst, die zusätzliche Daten, die eine Abtastfrequenz des Audiosignals darstellen, das in einer Aufzeichnungseinheit-Sequenz enthalten ist, in die Aufzeichnungseinheit-Sequenz einfügen, und wobei die Einfügevorrichtung (25) für zusätzliche Daten des Weiteren zusätzliche Daten, die die Anzahl von Audio-Abtastwerten in jeder Aufzeichnungseinheit darstellen, in die Aufzeichnungseinheit-Sequenz einfügt.

2. Digitale Audio-Aufzeichnungsvomchtung nach Anspruch 1, wobei die vorgegebene Größe auf der Grundlage einer Audiodaten-Menge bestimmt wird, für die ein Fehler, der während des Aufzeichnens und Wiedergebens eines linearen pulscodemodulierten digitalen Audiosignals auftritt, korrigiert werden kann.

3. Digitale Audio-Aufzeichnungsvorrichtung nach Anspruch 1 oder 2, wobei die Aufzeichnungseinheit auf der Grundlage einer Datenmenge bestimmt wird, die entsprechend einer Signalaufzeichnungseïgenschaft des digitalen Aufzeichnungsmediums kontinuierlich auf das digitale Aüfzeichnungsmedium aufgezeichnet werden kann.

4. Digitale Audio-Aufzeichnungsvorrichtung nach Anspruch 1, 2 oder 3, wobei die Formatiereinrichtung (20) eine entsprechende Bezugseinheit in eine Aufzeichnungseinheit formatiert, die sowohl einen ungeradzahlig nummerierten Datenblock als auch einen geradzahlig nummerierten Datenblock einschließt, die in der entsprechenden Bezugseinheit enthalten sind.

5. Digitale Audio-Aufzeichnungsvorrichtung nach Anspruch 1, wobei die Formatiereinrichtung (20) eine entsprechende Bezugseinheit in eine erste Aufzeichnungseinheit, die einen ungeradzahlig nummerierten Datenblock in der entsprechenden Bezugseinheit enthält, und eine zweite Aufzeichnungseinheit formatiert, die einen geradzahlig nummerierten Datenblock in der entsprechenden Bezugseinheit enthält.

6. Digitale Audio-Aufzeichnungsvorrichtung nach Anspruch 5, wobei die Einfügevorrichtung für zusätzliche Daten zweite zusätzliche Daten, die die erste Aufzeichnungseinheit und die zweite Aufzeichnungseinheit unterscheiden, die aus der gleichen Bezugseinheit gewonnen werden, in das vorangehende Ende der ersten und der zweiten Aufzeichnungseinheit einfügt.

7. Digitale Audio-Aufzeichnungsvorrichtung nach Anspruch 1, wobei die Formatiereinrichtung (20) eine Vielzahl von Bezugseinheiten in eine erste Aufzeichnungseinheit, die ungeradzahlig nummerierte Datenblöcke in der Vielzahl von Bezugseinheiten enthält, und eine zweite Aufzeichnungseinheit formatiert, die geradzahlig nummerierte Datenblöcke in der Vielzahl von Bezugseinheiten enthält.

8. Digitale Audio-Aufzeichnungsvorrichtung nach Anspruch 7, wobei die Einfügevorrichtung für zusätzliche Daten zweite zusätzliche Daten, die die erste und die zweite Aufzeichnungseinheit unterscheiden, die aus einer Vielzahl gleicher Bezugseinheiten gewonnen werden, in das vorangehende Ende der ersten und der zweiten Aufzeichnungseinheit einfügt.

9. Digitale Audio-Aufzeichnungsvorrichtung nach den Ansprüchen 1, 2 oder 3, wobei:
die Formatiereinrichtung (20) zum Formatieren einer Bezugseinheit-Sequenz in eine Aufzeichnungseinheit-Sequenz wenigstens zwei Aufzeichnungsformate aus einem ersten, einem zweiten und einem dritten Aufzeichnungsformat nutzt, wobei das erste Aufzeichnungsformat dazu dient, eine Bezugseinheit in eine erste Aufzeichnungseinheit, die sowohl einen ungeradzahlig nummerierten Datenblock als auch einen geradzahlig nummerierten Datenblock einschließt, der in der Bezugseinheit enthalten ist, zu formatieren, das zweite Aufzeichnungsformat dazu dient, eine Bezugseinheit in eine zweite Aufzeichnungseinheit, die einen ungeradzahlig nummerierten Datenblock einschließt, der in der Bezugseinheit enthalten ist, und eine dritte Aufzeichnungseinheit, die einen geradzahlig nummerierten Datenblock einschließt, der in der Bezugseinheit enthalten ist, zu formatieren, und das dritte Aufzeichnungsformat dazu dient, eine Vielzahl von Bezugseinheiten in eine vierte Aufzeichnungseinheit, die ungeradzahlig nummerierte Datenblöcke einschließt, die in der Vielzahl von Bezugseinheiten enthalten sind, und eine fünfte Aufzeichnungseinheit, die geradzahlig nummerierte Datenblöcke einschließt, die in der Vielzahl von Bezugseinheiten enthalten sind, zu formatieren.

10. Digitale Audio-Aufzeichnungsvorrichtung nach Anspruch 1, wobei die Einfügevorrichtung für zusätzliche Daten Einrichtungen (25, 27, 29) zum Einfügen zusätzlicher Daten umfasst, die Aufzeichnungsformatdaten, die ein Aufzeichnungsformat darstellen, das beim Formatieren einer Aufzeichnungseinheit-Sequenz genutzt wird, und erste zusätzliche Daten, die die Abtastfrequenz des Audiosignals darstellen, das in der Aufzeichnungseinheit-Sequenz enthalten ist, in die Aufzeichnungseinheit-Sequenz einfügen,
die zweite zusätzliche Daten, die die Anzahl der Audio-Abtastwerte in der ersten Aufzeichnungseinheit darstellen, in die Aufzeichnungseinheit-Sequenz dann einfügen, wenn die Bezugseinheit-Sequenz entsprechend dem ersten Autzeichnungsformat formatiert ist,
die dritte zusätzliche Daten, die eine zweite Aufzeichnungseinheit und eine dritte Aufzeichnungseinheit unterscheiden, die aus einer Bezugseinheit gewonnen werden, in die vorangehenden Enden der zweiten und der dritten Aufzeichnungseinheit dann einfügen, wenn die Bezugseinheit-Sequenz entsprechend dem zweiten Aufzeichnungsformat formatiert ist, und
die die vierten zusätzlichen Daten, die eine vierte Aufzeichnungseinheit und eine fünfte Aufzeichnungseinheit unterscheiden, die aus einer Vielzahl gleicher Bezugseinheiten gewonnen werden, in das vorangehende Ende der vierten und der fünften Aufzeichnungseinheit dann einfügen, wenn die Bezugseinheit-Sequenz entsprechend dem dritten Aufzeichnungsformat formatiert ist.

11. Digitale Audio-Aufzeichnungsvorrichtung nach einem der Ansprüche 1 bis 10, die des Weiteren eine digitale Audio-Wiedergabevorrichtung umfasst, die ein Audiosignal wiedergibt, das auf dem Aufzeichnungsmedium aufgezeichnet ist, wobei die Wiedergabevorrichtung umfasst:
einen Digital-Analog-(D/A)-Wandler (60), der Digital-Analog-Wandeln eines digitalen Eingangs-Audiosignals entsprechend einer vorgegebenen Betriebsfrequenz ausführt;
eine Leseeinrichtung (40). die formatierte Daten aus dem digitalen Aufzeichnungsmedium ausliest und eine Abtastfrequenz des digitalen Audiosignals, das in den formatierten Daten enthalten ist, unter Verwendung der gelesenen formatierten Daten erkennt; und
eine invers-Formatiereinrichtung (50), die Invers-Formatierung und Signalverarbeitung der formatierten Daten, die von der Leseeinrichtung ausgelesen werden, so ausführt, dass Digital-Analog-Wandeln durch den D/A-Wandler (60) ausgeführt werden kann, und zwar auf der Grundlage des Vergleichs zwischen der erkannten Abtastfrequenz und der vorgegebenen Betriebsfrequenz des D/A-Wandlers (60), und die das entstehende digitale Audiosignal an den D/A-Wandler (60) ausgibt,
wobei ein ungeradzahlig nummerierter Datenblock eine Sequenz der ungeradzahlig nummerierten Audio-Abtastwerte innerhalb wenigstens einer Bezugseinheit ist, und ein geradzahlig nummerierter Datenblock eine Sequenz der geradzahlig nummerierten Audio-Abtastwerte innerhalb der wenigstens einen Bezugseinheit ist.

12. Digitale Audio-Aufzeichnungsvorrichtung nach Anspruch 11, wobei die Bezugseinheit auf der Grundlage einer Audiodatenmenge bestimmt wird, für die ein Fehler, der während des Aufzeichnens und Wiedergebens eines linearen pulscodemodulierten digitalen Audiosignals auftritt, korrigiert werden kann.

13. Digitale Audio-Aufzeichnungsvorrichtung nach Anspruch 11, wobei die Aufzeichnungseinheit auf der Grundlage einer Datenmenge bestimmt wird, die entsprechend einer Signalaufzeichnungseigenschaft des digitalen Aufzeichnungsmediums kontinuierlich von dem digitalen Aufzeichnungsmedium ausgelesen werden kann.

14. Digitale Audio-Aufzeichnungsvorrichtung nach Anspruch 11, wobei die Invers-Formatiereinrichtung (50) Invers-Formatierung entweder eines ungeradzahlig nummerierten Datenblocks oder eines entsprechenden geradzahlig nummerierten Datenblocks oder beider zu einem digitalen Audiosignal ausführt, das dem D/A-Wandler (60) zuzuführen ist, und zwar auf der Grundlage des Vergleichs zwischen der erkannten Abtastfrequenz und der Betriebsfrequenz, wenn Daten, die mit einem Aufzeichnungsformat zum Formatieren einer Bezugseinheit in eine Aufzeichnungseinheit, die sowohl den ungeradzahlig nummerierten Datenblock als auch den geradzahlig nummerierten Datenblock einschließt, die in der Bezugseinheit enthalten sind, formatiert sind, auf dem digitalen Aufzeichnungsmedium aufgezeichnet werden.

15. Digitale Audio-Aufzeichnungsvorrichtung nach Anspruch 14, wobei die Invers-Formatiereinrichtung (50) Invers-Formatierung der ungeradzahlig nummerierten Datenblöcke oder der geradzahlig nummerierten Datenblöcke ausführt, wenn die erkannte Abtastfrequenz ein Vielfaches der Betriebsfrequenz ist, während sie Invers-Formatierung sowohl der ungeradzahlig nummerierten Datenblöcke als auch der geradzahlig nummerierten Datenblöcke ausführt, wenn die Betriebsfrequenz ein Vielfaches der erkannten Abtastfrequenz ist.

16. Digitale Audio-Aufzeichnungsvorrichtung nach Anspruch 11, wobei die Invers-Formatiereinrichtung (50) Invers-Formatierung entweder der ersten Aufzeichnungseinheit oder der zweiten Aufzeichnungseinheit oder beider in ein digitales Audiosignal ausführt, das dem D/A-Wandler (60) zuzuführen ist, und zwar auf der Grundlage des Vergleichs zwischen der erkannten Abtastfrequenz und der Betriebsfrequenz, wenn Daten, die entsprechend einem Aufzeichnungsformat zum Formatieren einer Bezugseinheit in eine erste Aufzeichnungseinheit, die den ungeradzahlig nummerierten Datenblock einschießt, der in der Bezugseinheit enthalten ist, und in eine zweite Aufzeichnungseinheit, die den geradzahlig nummerierten Datenblock einschließt, der in der Bezugseinheit enthalten ist, formatiert sind, auf dem digitalen Aufzeichnungsmedium aufgezeichnet werden.

17. Digitale Audio-Aufzeichnungsvorrichtung nach Anspruch 16, wobei die Invers-Formatiereinrichtung (50) Invers-Formatierung der ersten Aufzeichnungseinheit oder der zweiten Aufzeichnungseinheit ausführt, wenn die erkannte Abtastfrequenz ein Vielfaches der Betriebsfrequenz ist, während sie Invers-Formatierung sowohl der ungeradzahlig nummerierten Datenblöcke als auch der geradzahlig nummerierten Datenblöcke ausführt, wenn die Betriebsfrequenz ein Vielfaches der erkannten Abtastfrequenz ist.

18. Digitale Audio-Aufzeichnungsvorrichtung nach Anspruch 11. wobei die Invers-Formatiereinrichtung (50) Invers-Formatierung entweder einer ersten Aufzeichnungseinheit oder einer zweiten Aufzeichnungseinheit oder beider in ein digitales Audiosignal ausführt, das dem D/A-Wandler (60) zuzuführen ist, und zwar auf der Grundlage des Vergleichs zwischen der erkannten Abtastfrequenz und der Betriebsfrequenz, wenn Daten, die entsprechend dem Aufzeichnungsformat zum Formatieren einer Vielzahl von Bezugseinheiten in die erste Aufzeichnungseinheit, die die ungeradzahligen Datenblöcke einschließt, die in der Vielzahl von Bezugseinheiten enthalten sind, und in die zweite Aufzeichnungseinheit, die die geradzahlig nummerierten Datenblöcke einschließt, die in der Vielzahl von Bezugseinheiten enthalten sind, formatiert sind, auf dem digitalen Aufzeichnungsmedium aufgezeichnet werden.

19. Digitale Audio-Aufzeichnungsvorrichtung nach Anspruch 18, wobei die Invers-Formatiereinrichtung (50) Invers-Formatierung der ersten Aufzeichnungseinheit oder der zweiten Aufzeichnungseinheit ausführt, wenn die erkannte Abtastfrequenz ein Vielfaches der Betriebsfrequenz ist, während sie Invers-Formatierung sowohl der ersten Aufzeichnungseinheiten als auch der zweiten Aufzeichnungseinheiten ausführt, wenn die Betriebsfrequenz ein Vielfaches der erkannten Abtastfrequenz ist.

## Revendications

1. Un dispositif d'enregistrement audio numérique pour enregistrer sur un support d'enregistrement numérique un signal audio numérique reçu, le dispositif comprenant :
des moyens de formation d'unités de référence (10) pour recevoir un signal audio numérique modulé en codage par impulsions et former à partir du signal audio numérique reçu une séquence d'unités de référence, chaque unité de référence ayant une taille prédéterminée ;
des moyens de formatage (20) pour formater la séquence d'unités de référence en une séquence d'unités d'enregistrement dans laquelle au moins une unité d'enregistrement possède au moins un bloc de données parmi un bloc de données de numéro impair et un bloc de données de numéro pair qui existent dans au moins une unité de référence ; et
des moyens d'enregistrement (30) pour enregistrer sur un support d'enregistrement numérique la séquence d'unités d'enregistrement,
dans lequel le bloc de données de numéro impair est une séquence d'échantillons audio de numéro impair dans au moins une unité de référence, et le bloc de données de numéro pair est une séquence d'échantillons audio de numéro pair dans au moins une unité de référence ; **caractérisé en ce que** lesdits moyens de formatage (20) comprennent en outre un inserteur de donnés additionnelles (25) pour insérer à l'intérieur de la séquence d'unités d'enregistrement des données additionnelles représentant une fréquence d'échantillonnage du signal audio contenues dans une séquence d'unités d'enregistrement, et ledit inserteur de données additionnelles (25) insère en outre des données additionnelles représentant le nombre d'échantillons audio dans chaque unité d'enregistrement dans la séquence d'unités d'enregistrement.

2. Le dispositif d'enregistrement audio numérique selon la revendication 1, dans lequel la taille prédéterminée est déterminée sur la base d'une quantité de données audio pour laquelle il est possible de corriger une erreur introduite durant l'enregistrement et la reproduction d'un signal audio numérique linéaire modulé en codage par impulsions.

3. Le dispositif d'enregistrements audio numérique selon la revendication 1 ou 2, dans lequel ladite unité d'enregistrement est déterminée sur la base d'une quantité de données qui peut être enregistrée de façon continue sur ledit support d'enregistrement numérique en fonction d'une caractéristique d'enregistrement de signal du support d'enregistrent numérique.

4. Le dispositif d'enregistrement audio numérique selon la revendication 1, 2 ou 3, dans lequel lesdits moyens de formatage (20) formatent une unité de référence respective en une unité d'enregistrement comprenant à la fois un bloc de données de numéro impair et un bloc de données de numéro pair contenu dans l'unité de référence respective.

5. Le dispositif d'enregistrement audio numérique selon la revendication 1, dans lequel les moyens de formatage (20) formatent une unité de référence respective en une première unité d'enregistrement contenant un bloc de données de numéro impair dans l'unité de référence respective, et une seconde unité d'enregistrement contenant un bloc de données de numéro pair dans l'unité de référence respective.

6. Le dispositif de d'enregistrement audio numérique selon la revendication 5, dans lequel ledit inserteur de données additionnelles insère, dans la fin précédente de chacune des première et seconde unités d'enregistrement, des secondes données additionnelles qui distinguent la première unité d'enregistrement et la seconde unité d'enregistrement obtenues à partir de la même unité de référence.

7. Le dispositif d'enregistrement audio numérique selon la revendication 1, dans lequel lesdits moyens de formatage (20) formatent une pluralité d'unités de référence en une première unité d'enregistrement contenant des blocs de données de numéro impair dans la pluralité d'unités de référence et une seconde unité d'enregistrement contenant des blocs de données de numéro pair dans la pluralité d'unités de référence.

8. Le dispositif d'enregistrement audio numérique selon la revendication 7, dans lequel l'inserteur de données additionnelles insère, dans la fin précédente de chacune des première et seconde unités d'enregistrement, des secondes données additionnelles qui distinguent la première et la seconde unités d'enregistrement obtenues à partir d'une pluralité de mêmes unités de référence.

9. Un dispositif d'enregistrement audio numérique selon les revendications 1, 2 ou 3, dans lequel
les moyens de formatage (20) pour formater une séquence d'unités de référence en une séquence d'unités d'enregistrement utilisent au moins deux formats d'enregistrement parmi un premier, un second et un troisième formats d'enregistrement, où le premier format d'enregistrement est pour formater une unité de référence en une première unité d'enregistrement comprenant à la fois un bloc de données de numéro impair et un bloc de données de numéro pair contenus dans l'unité de référence, le second format d'enregistrement est pour formater une unité de référence en une seconde unité d'enregistrement comprenant un bloc de données de numéro impair contenu dans l'unité de référence et une troisième unité d'enregistrement comprenant un bloc de données de numéro pair contenu dans l'unité de référence, et le troisième format d'enregistrement est pour formater une pluralité d'unités de référence en une quatrième unité d'enregistrement comprenant des blocs de données de numéro impair contenus dans la pluralité d'unités de référence et une cinquième unité d'enregistrement comprenant des blocs de données de numéro pair contenus dans la pluralité d'unités de référence.

10. Le dispositif d'enregistrement audio numérique selon la revendication 1, dans lequel ledit inserteur de données additionnelles comprend des moyens d'insertion de données additionnelles (25, 27, 29) pour insérer, dans ladite séquence d'unités d'enregistrement, des données de format d'enregistrement représentant un format d'enregistrement utilisé pour formater une séquence d'unités d'enregistrement et des premières données additionnelles représentant la fréquence d'échantillonnage du signal audio qui est contenu dans la séquence d'unités d'enregistrement,
pour insérer, dans la séquence d'unités d'enregistrement, des secondes données additionnelles représentant le nombre d'échantillons audio dans la première unité d'enregistrement, au cas où la séquence d'unités de référence est formatée selon le premier format d'enregistrement,
pour insérer, dans les fins précédentes de chacune des seconde et troisième unités d'enregistrement, des troisièmes données additionnelles qui discriminent une seconde unité d'enregistrement et une troisième unité d'enregistrement obtenues à partir d'une unité de référence, au cas où la séquence d'unités de référence est formatée selon le second format d'enregistrement, et
pour insérer, dans les fins précédentes de chacune des quatrième et cinquième unités d'enregistrement, les quatrièmes données additionnelles qui discriminent une quatrième unité d'enregistrement et une cinquième unité d'enregistrement obtenues à partir d'une pluralité de mêmes unités de référence, au cas où la séquence d'unités de référence est formatée selon le troisième format d'enregistrement.

11. Le dispositif d'enregistrement audio numérique de l'une des revendications 1 à 10, comprenant en outre un dispositif de reproduction audio numérique pour reproduire un signal audio enregistré sur un support d'enregistrement, le dispositif de reproduction comprenant :
un convertisseur numérique/analogique (N/A) (60) pour une conversion numérique/analogique d'un signal audio numérique d'entrée en fonction d'une première fréquence de fonctionnement prédéterminée ;
des moyens de lecture (40) pour lire depuis le support d'enregistrement numérique des données formatées, et discriminer une fréquence d'échantillonnage du signal audio numérique contenu dans les données formatées en utilisant les données formatées lues ; et
des moyens de formatage inverse (50) pour le formatage inverse et le traitement de signal des données formatées lues par les moyens de lecture sous une forme qui permette d'effectuer la conversion numérique/analogique par ledit convertisseur N/A (60), sur la base d'une comparaison entre la fréquence d'échantillonnage discriminée et la fréquence de fonctionnement prédéterminée dudit convertisseur N/A (60), et pour délivrer en sortie audit convertisseur N/A (60) le signal audio numérique résultant.
dans lequel un bloc de données de numéro impair est une séquence des échantillons audio de numéro impair au sein d'au moins une unité de référence, et un bloc de données de numéro impair est une séquence des échantillons audio de numéro impair au sein de ladite au moins une unité de référence.

12. Le dispositif d'enregistrement audio numérique selon la revendication 11, dans lequel ladite unité de référence est déterminée sur la base d'une quantité de données audio pour laquelle il est possible de corriger une erreur introduite durant l'enregistrement et la reproduction d'un signal audio numérique linéaire modulé en codage par impulsions.

13. Le dispositif d'enregistrement audio numérique selon la revendication 11, dans lequel ladite unité d'enregistrement est déterminée sur la base d'une quantité de données qui peut être lue de façon continue depuis le support d'enregistrement numérique en fonction d'une caractéristique d'enregistrement de signal du support d'enregistrement numérique.

14. Le dispositif audio numérique selon la revendication 11, dans lequel lesdits moyens de formatage inverse (50) opèrent un formatage inverse de l'un et/ou de l'autre d'un bloc de données de numéro impair et d'un bloc de données correspondant de numéro pair en un signal audio numérique à appliquer audit convertisseur N/A (60), sur la base d'une comparaison entre la fréquence d'échantillonnage discriminée et la fréquence de fonctionnement, au cas où les données qui sont formatées par un format d'enregistrement pour formater une unité de référence en une unité d'enregistrement comprenant l'un et l'autre du bloc de données de numéro impair et du bloc de données de numéro pair contenus dans l'unité de référence, sont enregistrées sur le support d'enregistrement numérique.

15. Le dispositif d'enregistrement audio numérique selon la revendication 14, dans lequel lesdits moyens de formatage inverse (50) opèrent un formatage inverse de l'un des blocs de données de numéro impair et des blocs de données de numéro pair si la fréquence d'échantillonnage discriminée est un multiple de ladite fréquence de fonctionnement, tandis qu'ils opèrent un formatage inverse à la fois des blocs de données de numéro impair et des blocs de données de numéro pair si ladite fréquence de fonctionnement est un multiple de la fréquence d'échantillonnage discriminée.

16. Le dispositif d'enregistrement audio numérique selon la revendication 11, dans lequel lesdits moyens de formatage inverse (50) opèrent un formatage inverse de l'une et/ou l'autre de la première unité d'enregistrement et de la seconde unité d'enregistrement en un signal audio numérique à appliquer audit convertisseur NIA (60), sur la base d'une comparaison entre la fréquence d'échantillonnage discriminée et la fréquence de fonctionnement, au cas où les données qui sont formatées selon un format d'enregistrement pour formater une unité de référence en une première unité d'enregistrement comprenant le bloc de données de numéro impair contenu dans l'unité de référence et en une seconde unité d'enregistrement comprenant le bloc de données de numéro pair contenu dans l'unité de référence, sont enregistrées sur le support d'enregistrement numérique.

17. Le dispositif d'enregistrement audio numérique selon la revendication 16, dans lequel lesdits moyens de formatage inverse (50) opèrent un formatage inverse de l'une de la première unité d'enregistrement et de la seconde unité d'enregistrement si la fréquence d'échantillonnage discriminée est un multiple de ladite fréquence de fonctionnement, tandis qu'ils opèrent un formatage inverse à la fois des blocs de données de numéro impair et des blocs de données de numéro pair si ladite fréquence de fonctionnement est un multiple de la fréquence d'échantillonnage discriminée.

18. Le dispositif d'enregistrement audio numérique selon la revendication 11, dans lequel lesdits moyens de formatage inverse (50) opèrent un formatage inverse de l'une et/ou de l'autre d'une première unité d'enregistrement et d'une seconde unité d'enregistrement en un signal audio numérique pour être appliqué audit convertisseur N/A (60) sur la base d'une comparaison entre la fréquence d'échantillonnage discriminée et la fréquence de fonctionnement, au cas où les données qui y sont formatées selon le format d'enregistrement pour formater une pluralité d'unités de référence en la première unité d'enregistrement comprenant les blocs de données de numéro impair contenus dans la pluralité d'unités de référence et en la seconde unité d'enregistrement comprenant les blocs de données de numéro pair contenus dans la pluralité d'unité de référence, sont enregistrées sur le support d'enregistrement numérique.

19. Le dispositif d'enregistrement audio numérique selon la revendication 18, dans lequel lesdits moyens de formatage inverse (50) opèrent le formatage inverse de l'une de la première unité d'enregistrement et de la seconde unité d'enregistrement si la fréquence d'échantillonnage discriminée est un multiple de ladite fréquence de fonctionnement, tandis qu'il opèrent un formatage inverse à la fois des premières unités d'enregistrement et des secondes unités d'enregistrement si ladite fréquence de fonctionnement est un multiple de la fréquence d'échantillonnage discriminée.
